# EUROPÄISCHE PATENTSCHRIFT

(11) **EP 3 504 006 B1**
(45) Veröffentlichungstag und Bekanntmachung des Hinweises auf die Patenterteilung: **25.11.2026**
(21) Anmeldenummer: 17757750.9
(22) Anmeldetag: 23.08.2017
(51) Int. Cl.: B02C 13/14, B02C 23/10, B02C 23/14, B02C 23/26, B02C 19/00, B02C 23/16

(54) **PRALLREAKTOR**
IMPACT REACTOR
RÉACTEUR À IMPACTS

(30) Priorität: 24.08.2016 DE 102016115714
(43) Veröffentlichungstag der Anmeldung: 03.07.2019
(73) Patentinhaber: Schäfer Elektrotechnik U. Sondermaschinen GmbH, 67308 Rüssingen (DE)
(72) Erfinder: SCHÄFER, Ralf, 67308 Rüssingen (DE)
(74) Vertreter: Reiser & Partner Patentanwälte mbB
(86) Internationale Anmeldenummer: PCT/EP2017/071253
(87) Internationale Veröffentlichungsnummer: WO 2018/037053

(56) Entgegenhaltungen:
- WO-A1-97/18071
- WO-A2-2009/028795
- DE-A1- 102009 027 179
- DE-A1- 102010 006 916
- DE-U1- 202012 007 423

## Beschreibung

Die Offenbarung betrifft einen Prallreaktor zum Zerkleinern von Verbundmaterialien, umfassend einen zylindrischen Mantel, in welchem ein Rotor angebracht ist, der mit Prallelementen versehen ist, wobei der Prallreaktor an der dem Rotor abgewandten Stirnseite mit einem Deckel verschlossen ist, wobei dem Deckel eine Absaugöffnung zugeordnet ist. Prallreaktoren werden verwendet, um Gegenstände, die aus verschiedenen Materialien zusammengesetzt sind so zu zerkleinern, dass eine Stofftrennung möglich ist. Dabei werden die Gegenstände durch eine Schlagbeanspruchung mit einem hohen Impulsübertrag mittels rotierender Prallelemente zerkleinert und in Einzelbestandteile aufgetrennt.

Aus der EP 0 859 693 B1 ist ein Prallreaktor bekannt mit einem zylindrischen Grundkörper, in welchem ein durch ein Antriebsmotor angetriebener Rotor angeordnet ist. Der Rotor ist aus verschleißfestem Stahl ausgebildet und weist an seinen propellerförmigen oder flügelförmigen Enden austauschbare Prallelemente auf.

Im Umfangsbereich des Prallreaktors können Auswurföffnungen angeordnet sein, welche mit geschlitzten oder gelochten Abdeckblechen abgedeckt sein können, so dass ein differenzierter Austrag von zerkleinerten Partikeln in gewünschter Partikelgröße möglich ist.

Aus der DE 10 2010 006 916 A1 ist eine Vorrichtung zur Erzeugung eines feinkörnigen Brennstoffs bekannt, welche einen Prallreaktor mit einem Rotor und Prallelementen aufweist.

WO 97/18071 A1 zeigt einen Prallreaktor zum Verarbeiten von Bauteilen aus Mischkunststoffen und damit vermischten anderen Baustoffen.

DE 20 2012 007 423 U1 zeigt eine Vorrichtung zum Herstellen von organischen Faserstoffen oder Granulaten, welche einen Prallreaktor aufweist.

Derzeit besteht ein Problem darin, Gegenstände zu zerkleinern, welche pulverförmige Bestandteile aufweisen. In diesem Zusammenhang sind beispielsweise Lithium-Ionen-Akkumulatoren problematisch. Diese weisen im Ausgangszustand eine mit Lösemittel versetzte Aktivmasse auf, welche auf eine mit Kupfer und Aluminium beschichtete Kunststofffolie aufgebracht ist. Im Zuge der Aufbereitung der Akkus bildet sich aus der Aktivmasse ein feinpulvriger Staub. Dies gilt insbesondere dann, wenn die Akkumulatoren vor der Zerkleinerung in einem Prallreaktor pyrolysiert werden. Dieser kann mit den bekannten im Umfangsbereich des Prallreaktors eingebrachten Entnahmeöffnungen nicht gezielt aus dem Prallreaktor herausgeführt werden. Ein Verfahren zur sicheren Zerkleinerung von Batterien, bei welchem beispielsweise das im Zerkleinerungsprozess gewonnene Pulver in einem Wasserbad mit Bindemittel aufgefangen, anschließend gefiltert und getrocknet wird, ist aus der DE 10 2009 027179 A1 bekannt.

Der Erfindung liegt die Aufgabe zugrunde, ein Verfahren zur Aufbereitung von Akkumulatoren in einem Prallreaktor anzugeben, welches das Herausführen pulvriger Bestandteile ermöglicht.

Diese Aufgabe wird mit den Merkmalen von Anspruch 1 gelöst. Auf vorteilhafte Ausgestaltungen nehmen die Unteransprüche Bezug.

Der Prallreaktor zum Zerkleinern von Verbundmaterialien umfasst einen zylindrischen Mantel, in welchem ein Rotor angeordnet ist, der mit Prallelementen versehen ist, wobei der Prallreaktor an der dem Rotor abgewandten Stirnseite mit einem Deckel verschlossen ist, wobei dem Deckel eine Absaugöffnung zugeordnet ist, wobei der Absaugöffnung eine Klassiereinrichtung zugeordnet ist.

Die Klassiereinrichtung ist ein Bestandteil des Prallreaktors und unmittelbar der Absaugöffnung zugeordnet. Vorzugsweise ist der Rotor des Prallreaktors im Bodenbereich des Mantels angeordnet. Der Deckel mit der Absaugöffnung ist auf der dem Rotor abgewandten Stirnseite angeordnet, so dass die Absaugöffnung einen größtmöglichen Abstand zum Rotor aufweist. Alternativ ist es denkbar, die Absaugöffnung im Mantel anzuordnen. Werden nun Verbundmaterialien in den Prallreaktor eingebracht, welche pulverförmige Bestandteile haben, entsteht im Zuge der mechanischen Beanspruchung durch den Rotor eine staubhaltige Atmosphäre innerhalb des Prallreaktors. Durch die in der Absaugöffnung angeordnete Klassiereinrichtung kann eine Abtrennung grober Partikel erfolgen, so dass nur feinpulvrige Stäube aus der Absaugöffnung entnommen werden.

Nachfolgend an die Klassiereinrichtung kann dann eine Aufbereitung der Pulver bzw. staubbelasteten Abluft erfolgen. Hierzu kommt vorzugsweise ein physikalisches Trennverfahren zum Einsatz. Die Aufbereitung kann beispielsweise in einem Schwerkraftsichter oder Fliehkraftsichter erfolgen. Hierbei ist es insbesondere denkbar, einen Zick-Zack-Sichter einzusetzen.

Die Klassiereinrichtung ist als Windsichter ausgebildet. Bei einem Windsichter werden Partikel anhand ihres Verhältnisses von Trägheit bzw. Schwerkraft zum Strömungswiderstand in einem Gasstrom getrennt. Dabei folgen feine bzw. leichte Partikel der Strömung, wohingegen schwere Partikel der Massenkraft folgen.

Die Klassiereinrichtung ist als Abweiserad ausgebildet. Dabei weist das Abweiserad zwei voneinander beabstandete Rotorscheiben mit dazwischen angeordneten Rotorblättern auf. Dabei ist das Abweiserad ein spezieller Typ eines Windsichters. Das Abweiserad ist in Form eines Ventilators ausgebildet. Die Luft mit den zerkleinerten Partikeln strömt durch den rotierenden Rotor hindurch. Dabei findet zwischen Rotor und einströmenden Partikeln ein Impulsübertrag statt. Gleichzeitig werden die Partikel in den einströmenden Luftstrom mitgerissen. Partikel, bei denen die durch den Luftstrom ausgeübte Schleppkraft kleiner ist als die durch die Rotation des Rotors induzierte Fliehkraft, erhalten durch Impulsübertrag des Rotors eine Richtungsänderung und werden in den Prallreaktorraum zurückgeleitet. Insofern werden die umgelenkten Partikel nicht durch das Abweiserad hindurchgelassen. Partikel, bei denen die Schleppkraft des Luftstroms größer ist als die durch den Rotor ausgeübte Fliehkraft gelangen hingegen mit dem Luftstrom durch das Abweiserad hindurch.

Bei Abweiserädern ist vorteilhaft, dass diese eine große Trennschärfe, insbesondere bei kleinen und leichten Partikeln aufweisen. Dadurch kann die Partikelgröße der hindurchzulassenden Partikel genau eingestellt werden. Des Weiteren ist ein Abweiserad besonders robust, so dass auch ein Einsatz zur Zerkleinerung von abrasiven Partikeln denkbar ist.

Vorzugsweise ist das Abweiserad so ausgebildet, dass verhindert wird, dass sich Partikel im Inneren des Abweiserads oder an den Rotorblättern ansammeln.

Dazu können die Rotorblätter so ausgeführt sein, dass diese außenseitig abgerundet sind. Dazu können die Rotorblätter ein Rohr aufweisen, an welchem innenseitig Blechstreifen angeordnet sind, welche sich an einer Kante berühren. Dadurch ist das Rotorblatt außenseitig gerundet ausgeführt und innenseitig weist das Rotorblatt eine dreieckige Grundform auf.

Nach einer weiteren vorteilhaften Ausgestaltung ist auf dem Bodenblech des Rotors ein Leitblech angeordnet, welches pyramidenförmig ausgebildet sein kann. Dadurch verringert sich im Inneren des Rotors der Strömungsquerschnitt in Richtung auf die Absaugöffnung. Aufgrund der Querschnittsverringerung steigt in diesem Bereich die Strömungsgeschwindigkeit stark an. Durch das Abweiserad hindurchtretende Partikel werden dadurch sicher aus dem Abweiserad herausgeführt.

Die Klassiereinrichtung kann ausgebildet sein, Partikel mit einer vorwählbaren Partikelgröße abzuscheiden. Dabei ist insbesondere vorteilhaft, dass je nach zu zerkleinerndem Material und je nach gewünschtem Zerkleinerungsergebnis die Partikelgröße einstellbar ist. Dabei kann die Klassiereinrichtung so eingestellt werden, dass über die Absaugöffnung während eines Zerkleinerungszyklus Partikel mit einer vorbestimmten Partikelgröße abgeschieden werden.

Darüber hinaus ist es denkbar, dass die Klassiereinrichtung während eines Zerkleinerungszyklus in einem ersten Abschnitt Partikel mit einer ersten Partikelgröße und in einem zweiten Abschnitt Partikel mit einer zweiten Partikelgröße abscheidet. In diesem Fall wird die Klassiereinrichtung während eines Zerkleinerungszyklus derart modifiziert, dass die Klassiereinrichtung Partikel mit einer anderen Partikelgröße abscheidet.

Eine derartige Modifikation ist besonders einfach im Fall des rotierenden Siebes oder des Abweiserades. Bei beiden Ausgestaltungen erfolgt eine Modifikation durch Änderung der Drehzahl. Steigt die Drehzahl an, verkleinert sich die Partikelgröße der durch das rotierende Sieb oder durch das Abweiserad hindurchgelassenen Partikel. Dabei kann die Modifikation auch während eines Zerkleinerungszyklus und stufenlos erfolgen.

Der Klassiereinrichtung kann eine Abreinigungsvorrichtung zugeordnet sein. Dazu kann die Klassiereinrichtung beispielsweise auf der Seite der Absaugöffnung eine Einrichtung zum Aufbringen eines Gegendrucks angeordnet sein. Dazu können beispielsweise Düsen oder Lanzen vorgesehen sein. Diese können auch in das Innere der Klassiereinrichtung hineinragen und beispielsweise bei Überschreiten eines vorgewählten Differenzdrucks einen Druckstoß auslösen, welcher ein Abreinigen der Klassiereinrichtung bewirkt. Dadurch kann verhindert werden, dass die Klassiereinrichtung verstopft. Das Abreinigungsmedium kann ein Gas, beispielsweise ein Kühlgas oder ein Heißgas sein. Das Abreinigungsmedium kann auch eine Flüssigkeit sein.

In den Prallreaktor kann eine Zuluftöffnung eingebracht sein. Dies ermöglicht die Herstellung eines zirkulierenden Luftstroms. Dadurch verbessert sich der Austrag von Partikeln aus dem Prallreaktor. Des Weiteren ist es denkbar, dass der Prallreaktor mit einem Inertgas wie beispielsweise Stickstoff beaufschlagt wird. Dies ist insbesondere dann vorteilhaft, wenn reaktive oder explosive Materialien in dem Prallreaktor verarbeitet werden sollen.

Die Zuluftöffnung ermöglicht auch eine besonders einfache Temperierung der Zuluft, so dass in dem Prallreaktor beispielsweise eine Trocknung durchgeführt werden kann. Diese verbessert sich noch einmal durch eine vorab durchgeführte Trocknung der Zuluft. Darüber hinaus kann auch die Klassiereinrichtung mit einer Trocknungseinrichtung versehen sein, so dass eine Trocknung der mit Partikeln versehenen Abluft erfolgen kann. Durch die Temperierung der Zuluft kann ebenso eine Kühlung realisiert werden, so dass durch die Zuluft eine Kühlung der Atmosphäre innerhalb des Prallreaktorraums erfolgen kann.

Der Mantel kann im Bereich des Rotors geschlossen sein. Dadurch ergibt sich eine besonders hohe Standzeit des Prallreaktors was mit einem geringen Wartungsaufwand einhergeht. Es kann aber vorgesehen sein, dass im Umfangsbereich des Mantels im Bereich der Rotoren Entnahmeöffnungen in Form von Klappen vorgesehen sind. Diese ermöglichen das Entnehmen von groben, insbesondere metallischen Partikeln aus dem Prallreaktor.

Den Entnahmeöffnungen können Siebe zugeordnet sein. Dadurch kann eine Stofftrennung erfolgen. Es können beispielsweise metallische Partikel über die Siebe entnommen werden, welche einen gewünschten Zerkleinerungsgrad erreicht haben, während größere Partikel in dem Prallreaktorraum verbleiben und weiter zerkleinert werden.

Der Klassiereinrichtung ist eine Einrichtung zur Abluftnachbehandlung der über die Absaugöffnung entnommenen Abluft zugeordnet. Eine derartige Abluftnachbehandlung ist insbesondere dann vorteilhaft, wenn durch die Zerkleinerung Schadgase, beispielsweise reaktive Gase entstehen. Derartige Schadgase werden im Zuge der Abluftnachbehandlung aus der Abluft entfernt. Eine einfache und kostengünstige Abluftnachbehandlung ist beispielsweise durch eine Nachverbrennung der Abluft in einer Brennkammer gegeben. Ferner ist denkbar, eine Gasfiltration oder dergleichen durchzuführen.

Das erfindungsgemäße Verfahren zur Aufbereitung von Akkumulatoren in einem Prallreaktor sieht vor, dass die Akkumulatoren dem Prallreaktor zugeführt und in dem Prallreaktor durch mechanische Beanspruchung des mit den Prallelementen versehenen Rotors zerkleinert werden, wobei die staubigen Anteile der Akkumulatoren über die Absaugöffnung aus dem Prallreaktor entfernt werden.

Die Akkumulatoren können vor dem Zuführen in den Prallreaktor in einem ersten Schritt geöffnet werden.

Die Akkumulatoren können nach dem Öffnen zunächst einer Pyrolyse zugeführt werden, bei welcher flüchtige oder brennbare Bestandteile aus den Akkumulatoren entfernt werden und wobei die Akkumulatoren anschließend dem Prallreaktor zugeführt werden.

Durch das erfindungsgemäße Verfahren können Akkumulatoren zur weiteren Verwertung aufbereitet werden, wobei die staubige, partikuläre Bestandteile, die so genannte Schwarzmasse oder Aktivmasse, sicher aus dem Prallreaktor abgeführt und aufbereitet werden kann. Dies vor dem Hintergrund der in der Schwarzmasse oder Aktivmasse enthaltenen wertvollen Basiswerkstoffe besonders vorteilhaft.

Dabei kann das Verfahren so geführt werden, dass unpyrolysierte Akkumulatoren in dem Prallreaktor zerkleinert werden. In diesem Fall verhindert eine Intertisierung des Prallreaktorraums, dass sich explosive Bestandteile der Akkumulatoren entzünden. Bei pyrolysierten Akkumulatoren kann eine Inertisierung des Prallreaktorraums entfallen.

Die über die Absaugöffnung abgesaugte Abluft kann nachbehandelt werden. Dabei kann die Abluftnachbehandlung insbesondere durch eine Abluftnachverbrennung erfolgen, bei welcher reaktive Gase der Abluft umgewandelt werden. Die Abluftnachbehandlung kann sich an die Klassierung anschließen. In diesem Zusammenhang ist ein stufenweiser Betrieb der Klassiereinrichtung vorteilhaft, bei welchem die Klassiereinrichtung zunächst so eingestellt wird, dass lediglich gasförmige Bestandteile aus dem Prallreaktorraum abgezogen und der Abgasnachbehandlung zugeführt werden und anschließend die Klassiereinrichtung so eingestellt wird, dass staubförmige Feststoffpartikel aus dem Prallreaktorraum ausgeschleust werden. Dabei ist vorteilhaft, dass zunächst reaktive Gase oder Schadgase aus dem Prallreaktorraum ausgeschleust werden. Nach dem Ausschleusen der staubförmigen Partikel verbleiben lediglich schwerere oder größere Feststoffpartikel, vorwiegend Metalle in dem Prallreaktorraum, welche über die Entnahmeöffnung ausgetragen werden.

Das erfindungsgemäße Verfahren eignet sich insbesondere, um Lithium-Ionen-Akkumulatoren zu verarbeiten. Jedoch können dem Prallreaktor auch Alkalimanganzellen, Zinkkohlezellen oder dergleichen zugeführt werden.

Der Prallreaktor ist auch vorteilhaft einsetzbar, um Mineralwolle aufzubereiten. Mineralwolle als Abfallstoff entsteht beispielsweise im Zuge der Herstellung und im Bauwesen, beispielsweise bei Renovierungen oder Erneuerungen. Es besteht dabei das Bedürfnis, Mineralwolle und hier insbesondere Steinwolle, Glaswolle oder Keramikwolle einer Wiederverwertung zuzuführen. Dabei besteht derzeit das Problem, dass die Mineralwolle aufgrund der Faserstruktur und der geringen Dichte nur bedingt transportierbar ist. Beispielsweise ist problematisch, dass aufzubereitende Mineralwolle nicht problemlos im Blasverfahren transportierbar ist.

Bei einem weiteren Verfahren wird die aufzubereitende Mineralwolle dem Prallreaktor zugeführt und in dem Prallreaktor durch mechanische Beanspruchung des mit den Prallelementen versehenen Rotors zerkleinert, wobei die zerkleinerte Mineralwolle über die Absaugöffnung aus dem Prallreaktor entnommen wird, wenn die Mineralwolle eine vorbestimmte Partikelgröße unterschreitet.

Dadurch ist es möglich, die Fasern der Mineralwolle so zu zerkleinern, beziehungsweise zu kürzen, dass die Mineralwolle nicht agglomeriert und einer Weiterverarbeitung besser zugeführt werden kann sowie bessere Produkteigenschaften aufweist. Zerkleinerte Mineralwolle mit kurzen Fasern kann beispielsweise im Blasverfahren transportiert werden.

Der Prallreaktor ist ferner geeignet, um Rohmaterial aufzubereiten. Bei dem entsprechenden erfindungsgemäßen Verfahren wird das Rohmaterial dem Prallreaktor zugeführt und in dem Prallreaktor durch mechanische Beanspruchung des mit den Prallelementen versehenen Rotors zerkleinert, wobei das zerkleinerte Rohmaterial über die Absaugöffnung aus dem Prallreaktor entnommen wird, wenn die Rohmaterialpartikel eine vorbestimmte Partikelgröße unterschreiten.

In diesem Zusammenhang ist es beispielsweise denkbar, mineralisches Material wie Ton in dem Prallreaktor zu zerkleinern, wobei staubförmige Tonpartikel über die Absaugöffnung entnommen werden. Durch die Ausgestaltung des Prallreaktors kann die Partikelgröße der Tonpartikel vorgewählt werden, so dass Tonpartikel in gewünschten Partikelgrößen einer Weiterverarbeitung zugeführt werden können.

Verwendbar ist der Prallreaktor auch zur Verarbeitung von Holz, Altholz, Holzverbundstoffen, Keramik, GFK, CFK, Holzcompound und Verbundwerkstoffen aus den zuvor genannten Materialien, auch im Verbund mit Metall. Zur Zerkleinerung kommen auch Metall-Metall-Verbunde in Betracht, wie sie beispielsweise in Katalysatoren eingesetzt werden. Ebenso können Sekundärrohstoffe wie Schlacken, Klärschlamm, Rechengut oder Aschen in dem Prallreaktor aufbereitet werden, wobei eine Abtrennung einer staubförmigen Fraktion über die Absaugöffnung erfolgt. Dabei ist es insbesondere denkbar, mittels des Prallreaktors aus den zuvor genannten Stoffen einen partikulären Ersatzbrennstoff zu erzeugen, welcher einer Staubfeuerung oder Granulatfeuerung zugeführt werden kann.

Des Weiteren ist es denkbar, in dem Prallreaktor organisches Material wie Getreide oder Reis zu zerkleinern. Dabei ist der Prallreaktor einerseits geeignet, ein mehlartiges Produkt herzustellen, welches über die Absaugöffnung entnommen werden kann. Andererseits ist der Prallreaktor auch geeignet, organische Begleitstoffe wie Weizenkleie oder Spelzen zu zerkleinern, welche dann einfacher oder besser einer stofflichen oder energetischen Weiterverwertung zugeführt werden können.

Einige Ausgestaltungen des Prallreaktors werden nachfolgend anhand der Figuren näher dargestellt. Diese zeigen, jeweils schematisch:
- Fig. 1: eine Prallreaktoranordnung;
- Fig. 2: eine Einrichtung zur Pyrolyse von Akkumulatoren;
- Fig. 3: eine weitere Prallreaktoranordnung;
- Fig. 4: eine (nicht erfindungsgemäße) Prallreaktoranordnung mit Aufgabeeinrichtung und Klassiereinrichtung;
- Fig. 5: eine (nicht erfindungsgemäße) Prallreaktoranordnung mit Zick-Zack-Sichter und Zyklonabscheider;
- Fig. 6: im Detail verschiedene Ausgestaltungen von Abscheiderädern;
- Fig. 7: im Detail verschiedener in den Prallreaktor integrierter Sichter (nicht erfindungsgemäß);
- Fig. 8: im Detail verschiedene im Kopfbereich des Prallreaktors angeordnete Sichter (nicht erfindungsgemäß);
- Fig. 9: verschiedene Ausgestaltungen von Zyklonabscheidern.

Die Figuren zeigen einen Prallreaktor 1, bzw. eine Prallreaktoranordnung zum Zerkleinern von Verbundmaterialien. Der Prallreaktor 1 umfasst einen zylindrischen Mantel 2 aus metallischem Material. Im Bodenbereich 3 im Inneren des Mantels 2 ist ein Rotor 4 angeordnet, welcher mit Prallelementen 5 versehen ist. Der Rotor 4 ist mit einem Elektromotor 6 wirkverbunden, welcher außerhalb des Mantels 2 angeordnet ist. Die den Rotor 4 mit dem Elektromotor 6 verbindende Welle verläuft in Axialrichtung des zylindrischen Mantels 2. Der Rotor 4 ist mit Flügeln versehen, welche radial von der Welle abragen. An den freien Enden der Flügel sind Prallelemente angeordnet. Die Prallelemente sind auswechselbar an den Flügeln befestigt.

Der Prallreaktor 1 ist an der dem Rotor 4 abgewandten Stirnseite mit einem Deckel 7 verschlossen. Dabei ist dem Deckel 7 eine Absaugöffnung 8 zugeordnet, in welcher eine Klassiereinrichtung 9 angeordnet ist.

In den Prallreaktor ist eine Zuluftöffnung eingebracht. Diese ermöglicht es, innerhalb des Prallreaktors 1 einen Überdruck aufzubauen. Des Weiteren kann das Innere des Prallreaktors 1 mit einem Inertgas beaufschlagt werden. Der Prallreaktor 1 eignet sich insbesondere zur Aufbereitung von Akkumulatoren, insbesondere zur Aufbereitung von Lithium-Ionen-Akkumulatoren.

Zur Aufbereitung werden diese in einem ersten Schritt geöffnet. Dies kann beispielsweise durch eine Stachelwalze oder dergleichen erfolgen. In einem zweiten Schritt werden die Akkumulatoren einer Pyrolyse zugeführt, bei der flüchtige oder brennbare Bestandteile aus den Akkumulatoren entfernt werden. In einem nächsten Schritt werden die Akkumulatoren in dem Prallreaktor 1 durch mechanische Beanspruchung des mit den Prallelementen versehenen Rotors 4 zerkleinert. Dabei werden staubige Anteile der Akkumulatoren über die Absaugöffnung 8 aus dem Prallreaktor 1 entfernt. Größere Partikel, beispielsweise metallisches Granulat sammelt sich im Bodenbereich des Prallreaktors an und wird zyklisch aus dem Prallreaktor entfernt.

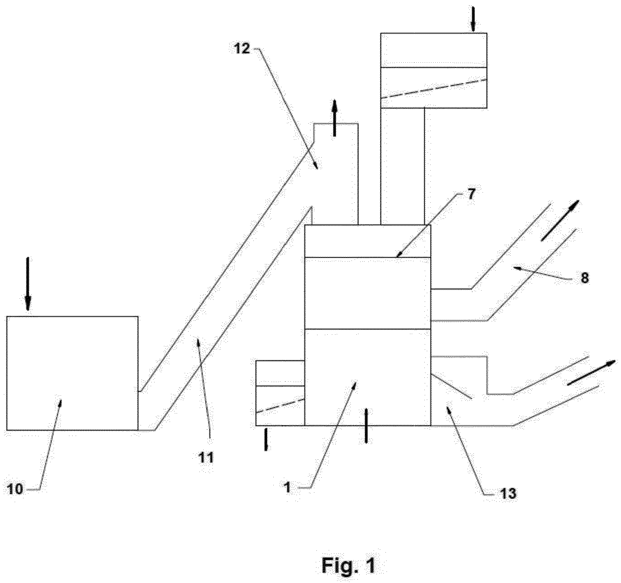

Figur 1 zeigt eine Prallreaktoranordnung, welche insbesondere zur Aufbereitung von Akkumulatoren, beispielsweise Lithium-Ionen-Akkumulatoren geeignet ist. Das zu zerkleinernde Material, beispielsweise die Akkumulatoren werden dabei aus einem Bunkerbehälter 10 mit Wiegeeinrichtung entnommen und über ein Zuführband 11 mit Materialschleuse 12 in den Prallreaktor 1 eingebracht. Dort wird das Material durch über die Rotoren 4 eingebrachte mechanische Energie zerkleinert.

Während der Zerkleinerung werden die Komponenten der Akkumulatoren voneinander getrennt, wobei sich größere Bestandteile aus Metall oder Kunststoff im Bodenbereich des Prallreaktors ansammeln und über eine im Bodenbereich angeordnete Entnahme 13 entnommen werden können. Eine Sortierung kann dabei durch einen Magnetaustrag erfolgen, welcher magnetische von nicht-magnetischen Materialien trennt.

Partikuläre Bestandteile, insbesondere die in den Akkumulatoren enthaltene Schwarzmasse werden hingegen über die im Bereich des Deckels 7 angeordnete Absaugöffnung 8 aus dem Prallreaktor herausgeführt.

Der Innenraum des Prallreaktors kann inertisiert sein. Darüber hinaus kann der Innenraum des Prallreaktors einen im Vergleich zur Umgebung geringeren Druck aufweisen, so dass keinerlei unerwünschte gasförmige Bestandteile aus dem Zerkleinerungsprozess in die Umgebung gelangen können.

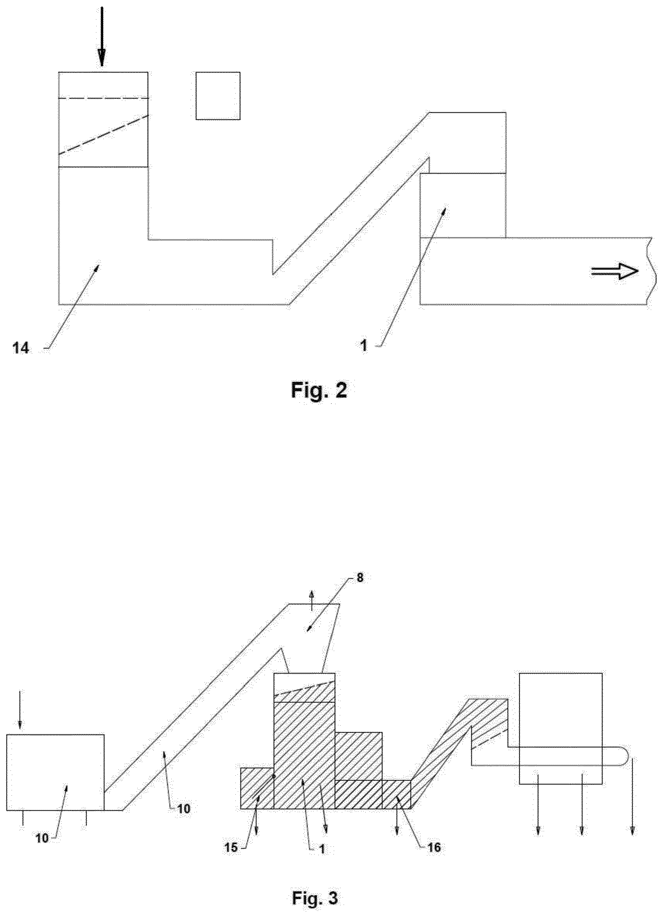

Der oben beschriebenen Anordnung mit dem Prallreaktor 1 werden vorzugsweise pyrolysierte Akkumulatoren zugeführt. Eine Einrichtung zur Pyrolyse von Akkumulatoren und dergleichen zeigt Figur 2.

Material, insbesondere Akkumulatoren werden einem Behälter 14 entnommen und über eine Materialaufgabe einem Prallreaktor 1 zugeführt. Dort wird das Material, beispielsweise die Akkumulatoren derart mechanisch beansprucht, dass sich Gehäuseteile öffnen und etwaige Wicklungen von Elektrodenlagen öffnen. Die zugeführte Energie ist dabei verhältnismäßig gering, so dass das Material nicht zerkleinert, sondern lediglich aufgeschlossen wird, so dass alle Bestandteile des Materials gleichermaßen unter der Pyrolyse reagieren. Im Anschluss an diese Vorbehandlung wird das Material der Pyrolyse zugeführt. Durch den vorherigen Aufschluss kann dabei verhindert werden, dass schlagartig explosive Gase freiwerden. Die Pyrolyse kann gleichmäßig in Gang gesetzt werden und kontinuierlich durchgeführt werden.

Figur 3 zeigt eine weitere Ausgestaltung einer Prallreaktoranordnung. Die Ausgestaltung gemäß Figur 3 ist dabei insbesondere geeignet, Gegenstände mit unpyrolysierten Akkumulatoren zu zerkleinern. Dies ist insbesondere bei Gegenständen vorteilhaft, welche mit fest eingebauten, bzw. integrierten Akkumulatoren versehen sind.

Bei dieser Ausgestaltung erfolgt die Aufgabe des Materials in den Prallreaktor 1 über eine Inertisierungsschleuse, welche verhindert, dass Gase aus dem Prallreaktor 1 in die Umgebung gelangen. Im Bodenbereich ist ein inertisierter Materialaustrag 15 vorgesehen, durch welchen Störstoffe entnommen werden können. Des Weiteren ist im Bodenbereich ein Magnetaustrag 16 angeordnet.

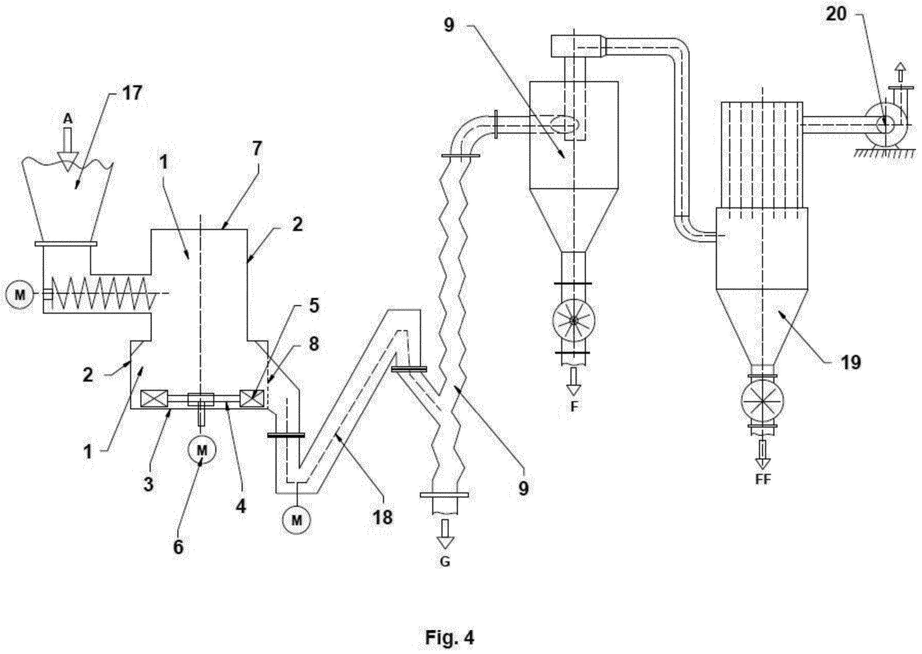

Figur 4 zeigt ein Anlagenschaubild einer Prallreaktoranordnung. Über eine Dosierung 17 wird Material in den Prallreaktor 1 eingebracht. Der Materialaustrag erfolgt über eine Absaugöffnung 8. In der daran anschließenden Steigleitung 18 werden grobe Partikel abgetrennt und das restliche Material wird zur Klassierung einer Klassiereinrichtung 9 in Form eines Zick-Zack-Sichters zugeführt. An die Klassiereinrichtung 9 schließt sich zur Abscheidung von Feingut ein Zyklonabscheider an. Anschließend durchläuft der Gasstrom einen Feinstabscheider 19 zur Abscheidung von Feinstgut und gelangt über ein Gebläse 20 in die Umgebung.

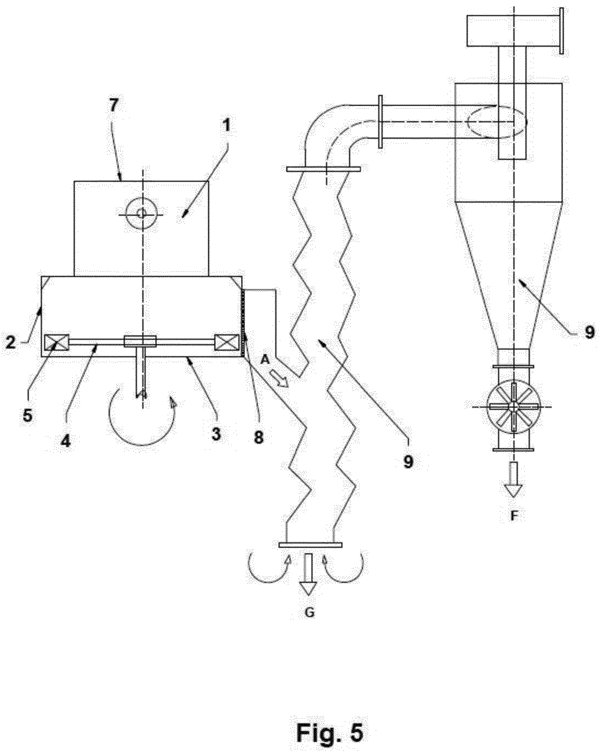

Figur 5 zeigt im Detail die Anordnung aus Prallreaktor 1 und Klassiereinrichtung 9 mit Zick-Zack-Sichter und Zyklonabscheider im Detail.

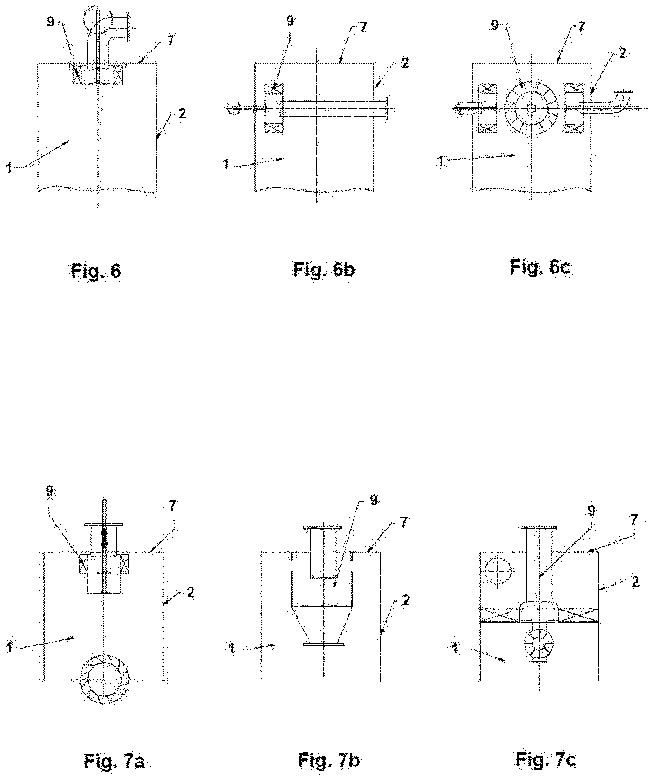

Bei der Ausgestaltung gemäß Figur 6 ist die Klassiereinrichtung 9 als Abweiserad ausgebildet. Das Abweiserad weist zwei voneinander beabstandete Rotorscheiben mit dazwischen angeordneten Rotorblättern auf. Die Rotorblätter sind außenseitig abgerundet und laufen innenseitig spitz zu. Im Schnitt weisen die Rotorblätter daher eine tropfenförmige Gestalt auf. Figur 6a zeigt einen axial zu dem Mantel 2 rotierendes Abweiserad und Figur 6b ein radial zu dem Mantel 2 rotierendes Abweiserad. Figur 6c zeigt mehrere in dem Prallreaktor 1 angeordnete Abweiseräder.

Die Figuren 7a, 7b und 7c zeigen verschiedene Ausgestaltungen statisch wirkender Klassiereinrichtungen 9.

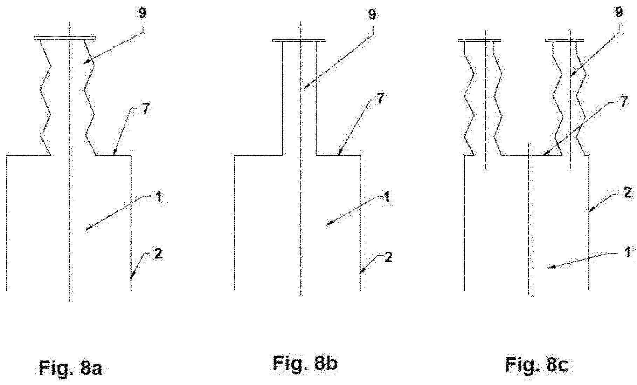

Die Figuren 8a, 8b und 8c zeigen verschiedene Ausgestaltungen von Klassiereinrichtungen 9 in Form von Schwerkraftsichtern.

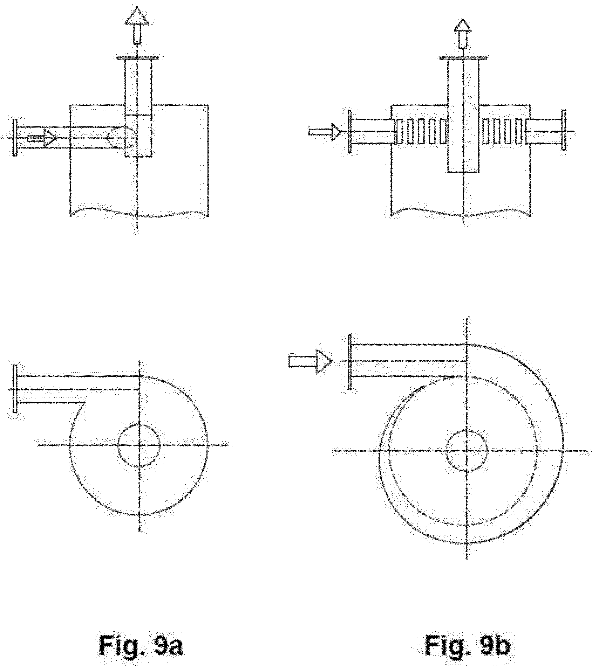

Die Figuren 9a und 9b zeigen verschiedene Möglichkeiten der Luftzufuhr.

Alternativ ist es möglich, die Klassiereinrichtung als Sieb auszubilden. Das Sieb kann walzenförmig ausgebildet sein, wobei das Sieb radial in den Prallreaktor hineinragt. Das Sieb kann mittels eines außerhalb des Prallreaktors befestigen Elektromotor in Rotation versetzt werden. In das walzenförmige Sieb ragt eine Abreinigungsvorrichtung in Form einer Lanze hinein. Die Lanze kann differenzdruckabhängig oder zyklisch im Inneren des Siebes einen Überdruck aufbauen durch welchen ein an dem Sieb außenseitig anhaftender Filterkuchen entfernt werden kann. Des Weiteren können in den Siebmaschen festsitzende Partikel, so genannte Klemmkörner, entfernt werden. Neben der Abreinigung durch den Druckstoß kann auch eine mechanische Abreinigung, beispielsweise durch Bürsten erfolgen.

Das Sieb ist so ausgebildet, dass Partikel mit einer Partikelgröße von 10 µm bis zu einer Größe von einigen Millimetern hindurchgelassen und somit aus dem Prallreaktor hinausgetragen werden. Das Abweiserad ist so ausgebildet, dass Partikel mit einer Partikelgröße von 5 µm bis 500 µm hindurchgelassen und somit aus dem Prallreaktor hinausgetragen werden.

## Patentansprüche

1. Verfahren zur Aufbereitung von Akkumulatoren in einem Prallreaktor (1) umfassend einen zylindrischen Mantel (2), in welchem ein Rotor (4) angeordnet ist, der mit Prallelementen (5) versehen ist, wobei der Prallreaktor (1) an der dem Rotor (4) abgewandten Stirnseite mit einem Deckel (7) verschlossen ist, wobei dem Deckel (7) eine Absaugöffnung (8) zugeordnet ist, wobei der Absaugöffnung (8) eine Klassiereinrichtung (9) zugeordnet ist, wobei die Klassiereinrichtung (9) als Windsichter in Form eines Abweiserades ausgebildet ist, wobei das Abweiserad zwei voneinander beabstandete Rotorscheiben mit dazwischen angeordneten Rotorblättern umfasst, wobei der Klassiereinrichtung (9) eine Einrichtung zur Abluftnachbehandlung der über die Absaugöffnung (8) entnommenen Abluft zugeordnet ist, wobei die Akkumulatoren dem Prallreaktor (1) zugeführt und in dem Prallreaktor (1) durch mechanische Beanspruchung des mit den Prallelementen versehenen Rotors (4) zerkleinert werden, wobei die staubigen Anteile der Akkumulatoren über die Absaugöffnung (8) aus dem Prallreaktor (1) entfernt werden.

2. Verfahren nach Anspruch 1, **dadurch gekennzeichnet, dass** die Akkumulatoren zunächst einer Pyrolyse zugeführt werden, bei welcher flüchtige oder brennbare Bestandteile aus den Akkumulatoren entfernt werden und die Akkumulatoren anschließend dem Prallreaktor (1) zugeführt werden.

3. Verfahren nach Anspruch 1 oder 2, **dadurch gekennzeichnet, dass** die über die Absaugöffnung abgesaugte Abluft nachbehandelt wird.

## Claims

1. Method for processing accumulators in an impact reactor (1) comprising a cylindrical shell (2), in which a rotor (4) is arranged, which is provided with impact elements (5), wherein the impact reactor (1) is closed with a cover (7) on the end side facing away from the rotor (4), wherein an extraction aperture (8) is allocated to the cover (7), wherein a classification device (9) is allocated to the extraction aperture (8), wherein the classification device (9) is configured as a wind sifter in the form of a deflector wheel, **characterised in that** the deflector wheel comprises two spaced-apart rotor discs with rotor blades arranged between them, wherein a device for exhaust air aftertreatment of the exhaust air that is extracted via the extraction aperture (8) is allocated to the classification device (9), wherein the accumulators are supplied to the impact reactor (1) and are comminuted in the impact reactor (1) by mechanical stressing of the rotor (4) that is provided with the impact elements, wherein the powdery portions of the accumulators are removed from the impact reactor (1) via the extraction aperture (8).

2. Method according to claim 1, **characterised in that** the accumulators are first supplied to a pyrolysis, in which volatile or combustible components are removed from the accumulators and the accumulators are then supplied to the impact reactor (1).

3. Method according to claim 1 or 2, **characterised in that** the exhaust air that is extracted via the extraction opening is aftertreated.

## Revendications

1. Procédé de traitement d'accumulateurs dans un réacteur à impacts (1) comprenant une enveloppe cylindrique (2) dans laquelle est disposé un rotor (4) qui est pourvu d'éléments d'impacts (5), le réacteur à impacts (1) étant fermé par un couvercle (7) sur le côté frontal opposé au rotor (4), une ouverture d'aspiration (8) étant associée au couvercle (7), un moyen de criblage (9) étant associé à l'ouverture d'aspiration (8), le moyen de criblage (9) étant constitué par un séparateur pneumatique sous la forme d'une roue déflectrice, **caractérisé en ce que** la roue déflectrice comprend deux disques de rotor espacés l'un de l'autre entre lesquels sont disposées des pales de rotor, un moyen de traitement ultérieur d'air d'échappement de l'air d'échappement prélevé par de l'ouverture d'aspiration (8) étant associé au moyen de criblage (9), les accumulateurs étant introduits dans le réacteur à impacts (1) et broyés dans le réacteur à impacts (1) par la sollicitation mécanique du rotor (4) pourvu des éléments d'impacts, les composants pulvérulents des accumulateurs étant retirés du réacteur à impacts (1) par l'ouverture d'aspiration (8).

2. Procédé selon la revendication 1, **caractérisé en ce que** les accumulateurs sont d'abord soumis à une pyrolyse, lors de laquelle des constituants volatils ou combustibles sont retirés des accumulateurs et les accumulateurs sont ensuite introduits dans le réacteur à impacts (1).

3. Procédé selon la revendication 1 ou 2, **caractérisé en ce que** l'air d'échappement aspiré par l'ouverture d'aspiration est soumis à un traitement ultérieur.
